# EUROPÄISCHE PATENTSCHRIFT

(11) **EP 3 702 180 B1**
(45) Veröffentlichungstag und Bekanntmachung des Hinweises auf die Patenterteilung: **25.08.2021**
(21) Anmeldenummer: 20157144.5
(22) Anmeldetag: 13.02.2020
(51) Int. Cl.: B60G 9/00, B60G 11/113, B60G 11/46, F16B 7/04, B60G 7/00

(54) **FAHRWERK FÜR EIN NUTZFAHRZEUG, SCHALE HIERFÜR SOWIE ANORDNUNG ZWEIER EIN SCHALEN-PAAR BILDENDER SCHALEN HIERFÜR**
CHASSIS FOR A COMMERCIAL VEHICLE, SHELL FOR SAME AND ARRANGEMENT OF TWO SHELLS FORMING A PAIR
CHÂSSIS POUR UN VÉHICULE UTILITAIRE, COQUES ASSOCIÉES AINSI QU'AGENCEMENT DE DEUX COQUES FORMANT UNE PAIRE DE COQUES ASSOCIÉ

(30) Priorität: 21.02.2019 DE 102019104428; 12.08.2019 DE 102019121667
(43) Veröffentlichungstag der Anmeldung: 02.09.2020
(73) Patentinhaber: BPW Bergische Achsen KG, 51674 Wiehl (DE)
(72) Erfinder: Iliev, Rossen, 51429 Bergisch Gladbach (DE); Leidig, Hans Josef, 51580 Reichshof (DE); Michels, Manfed, 51067 Köln (DE); Kriegeskotte, Thomas, 51580 Reichshof (DE)
(74) Vertreter: Christophersen & Partner Partnerschaft mbB Patentanwälte

(56) Entgegenhaltungen:
- EP-A1- 2 754 572
- WO-A1-2017/137034

## Beschreibung

Die Erfindung betrifft ein Fahrwerk für ein Nutzfahrzeug mit einem sich quer zur Fahrzeuglängsrichtung erstreckenden Achskörper, einem sich im Wesentlichen in Fahrzeuglängsrichtung erstreckenden Achslenker und einer Schale zwischen dem Achskörper und dem Achslenker, welche eine dem Achslenker zugewandte Außenseite und eine dem Achskörper zugewandte Innenseite aufweist, wobei die Innenseite unter Druckbelastung unmittelbar gegen die Außenseite des Achskörpers abgestützt ist und an der Innenseite ausgebildete Vorsprünge materialverdrängend in die Außenseite des Achskörpers eingreifen.

Die Erfindung betrifft ferner eine Schale zur Anordnung zwischen einem Achskörper und einem Achslenker einer Nutzfahrzeugachse, mit einer dem Achslenker zugewandten Außenseite, mit einer Innenseite zur unmittelbaren Abstützung gegen den Achskörper, und mit an der Innenseite ausgebildeten Vorsprüngen für einen materialverdrängenden Eingriff in die Au-ßenseite des Achskörpers.

Die Erfindung betrifft ferner eine Anordnung zweier ein Schalenpaar bildender Schalen zwischen einem Achskörper und einem Achslenker einer Nutzfahrzeugachse, umfassend eine erste Schale und eine zu dieser im Abstand angeordnete zweite Schale, wobei jede der Schalen eine dem Achslenker zugewandte Außenseite und eine Innenseite zur unmittelbaren Abstützung gegen den Achskörper aufweist.

Aus der WO 2017/137034 A1 ist eine teilkreisförmig gestaltete Schale bekannt, die als Achsschale zwischen dem Achskörper und dem Achslenker des Nutzfahrzeug-Fahrwerks angeordnet ist. Die Achsschale ist mit ihrer konkaven Innenseite unmittelbar an dem Achskörper abgestützt und ferner mit einer dem Achslenker zugewandten Außenseite versehen. An ihrer konkav gekrümmten Innenseite ist die Schale mit aufgerauten Stützbereichen versehen, die mittels eines Laserstrahlverfahrens erzeugt sind. Dadurch weisen die Stützbereiche Vorsprünge in Form von Materialspitzen von solcher Härte auf, dass diese materialverdrängend in die im Vergleich weniger harte Außenseite des Achskörpers eingreifen, wodurch ein Formschluss entsteht. Die Schale besteht aus Sphäroeisenguss, was Voraussetzung dafür ist, die Aufrauhung mittels des Laserstrahlverfahrens zu erzielen, bei dem das Gussmaterial partiell aufgeschmolzen und so die spezielle, aufgeraute Oberflächenstruktur erzeugt wird. Zusätzlich kommt es durch eine schnelle Abkühlung zu einem Härten der Spitzen. Diese bekannte Schale weist an ihren vorderen und hinteren Rändern Ausnehmungen auf, die in Verbindung mit stangenförmigen Zugelementen zu einer Fixierung der Schale in Längsrichtung des Achskörpers führen. Dadurch kann die Achsschale in Längsrichtung des Achskörpers Kräfte aufnehmen und diese Kräfte an den Achslenker übertragen. Die Ausnehmungen eignen sich allerdings nicht dazu, auch in Achsumfangsrichtung Kräfte an den Achslenker zu übertragen, also Kräfte, wie sie typischerweise beim starken Bremsen des Fahrzeugs auftreten.

Fahrwerke für Nutzfahrzeuge, bei denen zwecks Verbesserung der Verbindung zwischen Achskörper und Achslenker zusätzliche Formschlussmittel vorhanden sind, sind ferner aus der EP 2 355 988 B2, der WO 2011/146163 A2 und der DE 10 2014 008 408 A1 bekannt. In der letztgenannten Publikation werden einzelne Verzahnungselemente beschrieben, die in Ausnehmungen im Achslenker eingesetzt sind. Die Verzahnungselemente sind Hartstoffkörper, wodurch eine Formschlussverbindung durch gegenseitiges Verpressen von Achskörper und Achslenker erreicht werden soll.

Auch aus der EP 1 334 848 B1 ist es bekannt, bei einem Nutzfahrzeugfahrwerk zwischen dem Achskörper und dem Achslenker eine zusätzliche Achsschale in Gestalt einer Halbschale anzuordnen. Diese ist an ihrer dem Achslenker zugewandten Außenseite mit Nasen versehen, um so einen ansonsten freibleibenden Bereich zwischen Achskörper und Achslenker zu füllen. Eine ähnliche Lösung wird in der DE 199 468 02 A1 vorgeschlagen.

Der Erfindung liegt die **Aufgabe** zugrunde, bei einem Nutzfahrzeug-Fahrwerk durch einfache technische Mittel Relativbewegungen einschließlich solcher in Achsumfangsrichtung zwischen den vor allem durch Klemmen verbundenen Fahrwerksteilen zu vermeiden.

Gelöst wird diese Aufgabe durch ein Fahrwerk für ein Nutzfahrzeug mit den Merkmalen des Patentanspruchs 1, durch eine Schale zur Anordnung zwischen einem Achskörper und einem Achslenker einer Nutzfahrzeugachse mit den Merkmalen des Patentanspruchs 16, und durch eine Anordnung zweier ein Schalenpaar bildender Schalen zwischen einem Achskörper und einem Achslenker einer Nutzfahrzeugachse mit den Merkmalen des Patentanspruchs 29.

Vorgeschlagen wird daher insbesondere, dass die verwendete Schale nicht nur auf ihrer einen Seite mit Vorsprüngen in Gestalt von Materialspitzen versehen ist, sondern dass weitere Vorsprünge an der anderen Seite der Schale, d. h. an deren Außenseite, ausgebildet sind. Auch diese weiteren Vorsprünge sind dafür ausgebildet, materialverdrängend in eine gegenüberliegende Fläche einzugreifen, wobei diese gegenüberliegende Fläche an dem Achslenker ausgebildet ist oder alternativ an einem Fahrwerksbauteil, welches seinerseits gegen den Achslenker abgestützt ist.

Der die Klemmung der Bauteile ergänzende Formschluss durch Eingraben von Spitzen oder Vorsprüngen findet also nicht nur auf der dem Achskörper zugewandten Innenseite der als Achsschale dienenden Schale statt, sondern ebenso auf deren Außenseite. An dieser Au-ßenseite kann sich gemäß einer ersten Variante der Erfindung unmittelbar der Achslenker befinden, also das den Achskörper während der Fahrt führende Fahrwerksteil. Bei einer anderen Variante ist das Bauteil, gegen welches die Schale mit ihrer die weiteren Vorsprünge aufweisenden Außenseite abstützbar ist, ein anderes Bauteil des Fahrwerks, welches also nicht der Achslenker selbst ist, jedoch ein seinerseits mit dem Achslenker verbundenes Fahrwerksbauteil. Dieses Fahrwerksbauteil kann z. B. eine zusätzliche Achsplatte sein. Solche Achsplatten werden häufig in Fahrwerkskonstruktionen verbaut, bei denen der Achslenker eine aus einem Federstahl bestehende, oft geschmiedete Lenkerfeder mit einem eigenen Federverhalten ist.

Erreicht wird eine eindeutige, sich nicht verändernde Positionierung der Schale sowohl unmittelbar gegenüber dem Achskörper in Folge der in den Achskörper greifenden Vorsprünge, als auch in Richtung zu dem Achslenker aufgrund der in den Achslenker oder in das achslenkerfeste Bauteil greifenden Vorsprünge. Auf diese Weise werden die vor allem bei einem starken Abbremsen des Fahrzeugs entstehenden Kräfte und Momente optimal durch das Fahrwerk und dessen Bauteile aufgenommen.

Fertigungstechnisch vorteilhaft ist es, wenn die Schale bzw. Achsschale als ein verformtes Metallblech ausgebildet ist, z. B. als ein Metallblech aus Edelstahl oder Federstahl. Die Schale lässt sich durch reine Umformprozesse ihre endgültige Gestalt einschließlich der Vorsprünge auf der Innenseite und der Außenseite geben.

Bevorzugt handelt es sich bei den Vorsprüngen und den weiteren Vorsprüngen um Stanzungen des Metallblechs. Dies eröffnet die Möglichkeit, die Schale in einem einzigen Fertigungsprozess zu produzieren. Mit diesem sind zwar relativ hohe Werkzeugkosten verbunden, jedoch lassen sich andererseits in kurzer Zeit hohe Stückzahlen der Achsschalen produzieren, was die Herstellung bei hohen Stückzahlen insgesamt preiswert macht.

Hinsichtlich der Stanzungen wird vorgeschlagen, dass diese
- zwischen der Außenseite und der Innenseite sich erstreckende Öffnungen umfassen,
- sowie am Rand jeder Öffnung entweder nur auf der Innenseite oder nur auf der Außenseite hervorstehende Grate umfassen, wobei die Grate die Vorsprünge bilden.
Fertigungstechnisch ist insbesondere vom Vorteil, wenn die Grate nach außen verformte Ränder der jeweiligen Öffnungen sind. Dies unterstützt die Scharfkantigkeit der Ränder. Gemäß einer weiteren Ausgestaltung der Schale weist diese auf zumindest einem Teilbereich einen gebogenen Querschnitt auf, zum Beispiel einen in Gestalt eines Teilkreises gebogenen Querschnitt. Die Gestalt des gebogenen Querschnitts kann insbesondere derart sein, dass dieser der Querschnittskontur des Achskörpers folgt, wodurch sich ein weitgehendes Anschmiegen der Innenseite der Schale an eine komplementär gestaltete Querschnittskontur des Achskörpers erreichen lässt.

Mit einer Ausgestaltung der Schale wird vorgeschlagen, dass deren Materialdicke ohne die Vorsprünge zwischen 0,5 mm und 1 mm beträgt, vorzugsweise zwischen 0,7 mm und 0,9 mm. Eine solche Blechdicke hat sich für den bei der Herstellung der Schale angewendeten Stanzprozess als besonders vorteilhaft herausgestellt.

Die Festigkeit des für die Schale verwendeten Metallblechs ist höher als die Festigkeit jener Materialien, in die die Spitzen eindringen, also des Materials des Achskörpers und des Bauteils. Vorzugsweise beträgt die Festigkeit des für die Schale verwendeten Metallblechs mindestens das Zweifache der Festigkeit des Achskörpers und der Festigkeit des gegen den Achslenker abgestützten Bauteils.

Gemäß einer ersten Ausführungsform der Schale bzw. Achsschale weist diese in Verlängerung des gebogenen Querschnitts jeweils einen Stützbereich auf, wobei die Übergänge zu den Stützbereichen als Knicke mit Knickrichtung entgegengesetzt zur Biegerichtung auf dem gebogenen Querschnitt gestaltet sind. Die insoweit zusätzlichen Stützbereiche erleichtern bei der Montage der Schale deren richtige Vorpositionierung relativ zu dem Achslenker oder dem gegen den Achslenker abgestützten Bauteil.

Da auf den Stützbereichen ein zusätzlicher Formschlusseffekt durch Spitzen oder Vorsprünge keine große Rolle spielen würde, wird vorgeschlagen, dass die Schale ausschließlich auf dem gebogenen Querschnitt mit den Vorsprüngen versehen ist.

Vorzugsweise ist die Schale mit einer zentral angeordneten Öffnung versehen, wobei sich alle Vorsprünge, in Richtung des Biegeverlaufs der Schale betrachtet, entweder vor oder hinter dieser Öffnung befinden. Hierbei ist von zusätzlichem Vorteil, wenn sich die Vorsprünge in Bereichen des gebogenen Querschnitts befinden, die bis an den Rand der Öffnung heranreichen. Denn in diesen Bereichen sind die zwischen dem Achskörper und dem Achslenker aufgrund des gegeneinander Klemmens wirkenden Kräfte am größten, und ist daher auch der Effekt des Eindringens der scharfkantigen Vorsprünge bzw. Spitzen in die gegenüberliegende Fläche am ausgeprägtesten.

Gemäß einer zweiten Ausführungsform kommt eine Anordnung zweier getrennter, ein Schalenpaar bildender Schalen zum Einsatz, bestehend aus einer ersten Schale und einer zu dieser im Abstand angeordneten zweiten Schale. Die Schalen weisen in ihrem Montage- und Betriebszustand jeweils einen gebogenen Querschnitt auf, vorzugsweise einen teilkreisförmig gebogenen Querschnitt.

Herstellungstechnisch kann es von Vorteil sein, wenn die beiden Schalen des Schalenpaars vor ihrer abschließenden Montage noch einen flachen Querschnitt aufweisen, jedoch biegsam sind. Sie werden dann spätestens bei der abschließenden Montage in ihre charakteristische Schalenform gebogen, die sie dann auch im Betrieb stets beibehalten.

Vorzugsweise ist jede Schale an ihrer Außenseite mit mindestens einer Lasche versehen, welche sich weiter nach außen erstreckt als die weiteren Vorsprünge. Die mindestens eine Lasche erleichtert bei der Montage der Schale deren richtige Vorpositionierung relativ zu dem Achslenker oder relativ zu dem gegen den Achslenker abgestützten Bauteil. Zum Beispiel verbessert die Lasche die vorläufige Fixierung in Längsrichtung des Achskörpers.

Besonders bevorzugt ist, dass an jeder Schale des Schalenpaars zwei derartige, nach außen abstehende Laschen ausgebildet sind. Dadurch wird eine Vorpositionierung der jeweiligen Schale in zwei entgegengesetzte Richtungen erreicht.

Vorzugsweise ist die Lasche eine entlang einer Knicklinie rechtwinklig abgeknickte Stanzung des Metallblechs, aus dem die jeweilige Schale besteht. Vorzugsweise erstreckt sich die Knicklinie in Richtung des Biegeverlaufs, den die Schale spätestens im Betriebszustand des Fahrwerks aufweist.

Weitere Vorteile und Einzelheiten ergeben sich aus der nachfolgenden Beschreibung zweier Ausführungsbeispiele, wobei auf die Zeichnung Bezug genommen wird. Darin zeigen:
- Fig. 1: in einer Seitenansicht eine Achseinbindung in einem luftgefederten Nutzfahrzeug-Fahrwerk, umfassend unter anderem einen in Fahrzeuglängsrichtung sich erstreckenden Achslenker sowie einen quer dazu angeordneten Achskörper, an dessen Enden die Fahrzeugräder des Fahrzeugs gelagert sind;

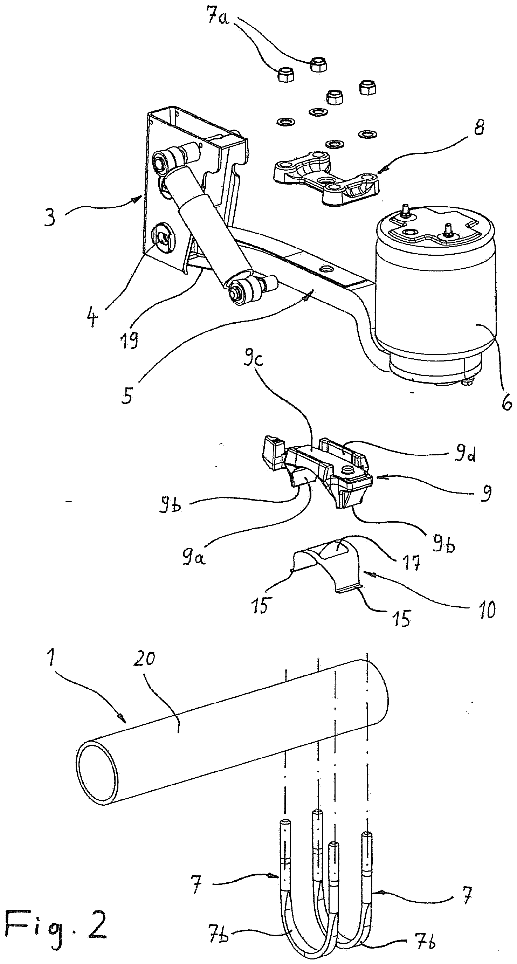

- Fig. 2: eine perspektivisch angelegte Explosionsdarstellung der Fahrwerksteile des Fahrwerks im Bereich der Achseinbindung, wobei die einzelnen Fahrwerksteile einschließlich einer Achsschale noch nicht montiert sind;
- Fig. 3: in perspektivischer Darstellung die noch nicht montierte Achsschale;
- Fig. 4: einen Schnitt durch die Achsschale in einem Bereich, in dem diese mit scharfkantigen Vorsprüngen an ihrer Innen- und Außenseite versehen ist, und
- Fig. 5: eine Draufsicht auf einen Bereich mit diesen Vorsprüngen, mit Blickrichtung senkrecht auf die Außenseite der Achsschale;
- Fig. 6: eine perspektivisch angelegte Explosionsdarstellung einer Achseinbindung in einem luftgefederten Nutzfahrzeug-Fahrwerk bei einer zweiten Ausführungsform der Erfindung, wobei die einzelnen Fahrwerksteile einschließlich zweier Achsschalen noch nicht montiert sind;
- Fig. 7: für die zweite Ausführungsform einen Schnitt durch den Bereich der hier bereits montierten Achsschalen, die mit scharfkantigen Vorsprüngen sowohl auf ihrer jeweiligen Innenseite als auch auf ihrer jeweiligen Außenseite versehen sind;
- Fig. 8: in perspektivischer Darstellung eine der beiden Achsschalen des Schalenpaars in nicht-montiertem Zustand;
- Fig. 9: in perspektivischer Darstellung ein Bauteil des Nutzfahrzeug-Fahrwerks, bevor die Achsschalen daran angesetzt wurden;
- Fig. 10: in perspektivischer Darstellung dasselbe Bauteil wie in Fig. 9, nachdem die Achsschalen daran angesetzt wurden, aber noch vor der Fertigmontage der Achseinbindung.

Das im Folgenden anhand zweier Ausführungsformen beschriebene Fahrwerk kommt zum Einsatz vor allem bei luftgefederten Fahrzeugen, die als Fahrzeugachse einen langen, durchgehenden Achskörper 1 aufweisen. Derartige Fahrzeugachsen kommen vor allem bei Lkw-Anhängern und -Aufliegern zum Einsatz. Die Achsen sind für hohe Transportgewichte im Straßenbetrieb ausgelegt.

Unter dem Fahrzeugrahmen bzw. Chassis 2 des Fahrzeugs ist auf jeder Fahrzeugseite eine Lenkerstütze 3 befestigt. Diese nimmt ein Schwenklager der Achsaufhängung auf. Zur Führung das sich quer zur Fahrzeuglängsrichtung erstreckenden und hier von der einen Fahrzeugseite bis zur anderen Fahrzeugseite starr durchgehenden Achskörpers 1 dient auf jeder Fahrzeugseite ein Achslenker 5. Der Achslenker ist hier eine Lenkerfeder, die selbst ein gewisses Federverhalten zeigt.

Der Achslenker 5 weist an seinem vorderen Ende einen Stützbereich mit einem Lenkerauge auf, welches Bestandteil eines Schwenklagers in der Lenkerstütze 3 ist. Mittels eines Bolzens 4, der Bestandteil dieses Schwenklagers ist, ist der Achslenker 5 vertikal schwenkbar in der chassisfesten Lenkerstütze 3 gehalten.

In Fahrtrichtung hinten ist der Achslenker 5 mit einer Auflagefläche für eine Luftfeder 6 versehen. Die Luftfeder 6 stützt sich mit einer oberen Abschlussplatte von unten gegen das Chassis 2 ab.

Der Achskörper 1 ist an jedem seiner fahrzeugäußeren Enden mit einem Achsschenkel zur Lagerung des Fahrzeugrades und der Bremstrommel oder Bremsscheibe einer Trommelbremse bzw. einer Scheibenbremse versehen.

Mittels zweier Gewindebügel 7 mit auf deren Gewindeabschnitten aufgeschraubten Muttern 7a, wobei die Bügelabschnitte 7b der Gewindebügel 7 um den als ein Achsrohr ausgebildeten Achskörper 1 herumgeführt sind, werden Klemmkräfte erzeugt, welche den Achslenker 5 gegen den Achskörper 1 ziehen. Dieses Klemmen erfolgt allerdings nicht unmittelbar, sondern mittelbar unter Zwischenlage eines achslenkerfest angeordneten Bauteils 9 in Gestalt eines Formstücks. Ein solches Bauteil 9 wird oft auch als Achsplatte bezeichnet. Dem Achskörper 1 zugewandt ist dieses gegossene oder geschmiedete Formstück 9 als eine teilkreisfömige Schale 9a mit einem Radius gleich oder etwas größer als der Radius des kreisrunden Achskörpers 1 gestaltet. An die Schale 9a schließen sich in beide Richtungen jeweils kurze Anlagebereiche 9b an, die der Abstützung von später näher erläuterten Blechabschnitten einer Schale dienen.

Das Formstück 9 ist mit einem Element 9e versehen, welches unter Formschluss in ein entsprechend großes Loch in der dem Achskörper 1 zugewandten Seite des Achslenkers 5 greift.

Die der Schale 9a abgewandte Seite des Formstücks 9 ist als eine Auflage 9c gestaltet, die sich unmittelbar gegen den Achslenker 5 abstützt, z. B. gegen dessen Unterseite. Zu beiden Seiten der Auflage 9c sind an dem Formstück 9 Seitenwände 9d ausgebildet, die sich im Montagezustand zu Positionierzwecken entlang der Seiten des Achslenkers 5 erstrecken.

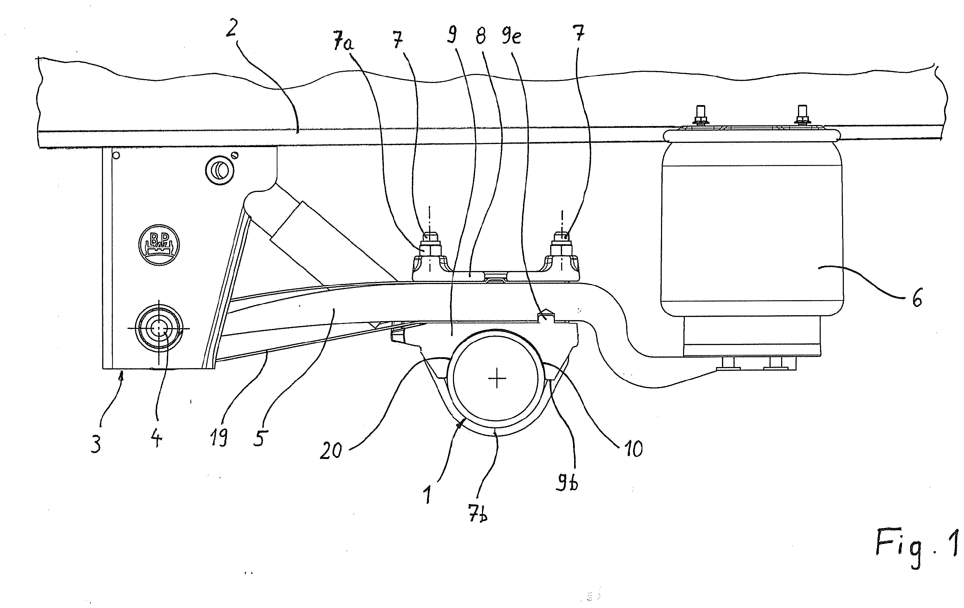

Eine Federplatte 8 stützt sich von der anderen, in Fig. 1 oberen Seite gegen den Achslenker 5 ab. Außen an der Federplatte 8 stützen sich die Muttern 7a der durch Öffnungen dieser Federplatte 8 hindurchgeführten Gewindebügel 7 ab.

Das mittelbare Klemmen des Achskörpers 1 gegen den Achslenker 5 erfolgt nicht nur unter Zwischenlage des Formstücks 9, sondern zusätzlich unter Zwischenlage einer Schale bzw. Achsschale 10. Die Schale 10 ist mit ihrer konkaven Innenseite 11 unmittelbar an der Außenseite 20 des Achskörpers 1 abgestützt, während ihre konvexe Außenseite 12 zwar dem Achslenker 5 zugewandt ist, sich aber unmittelbar nur an dem Formstück 9 abstützt.

Die Abstützung der Außenseite 12 der Achsschale 10 an dem Formstück 9 ist insofern dreigeteilt, als die Achsschale 10 einen langen, gebogenen Teilbereich aufweist, mit dem sie sich gegen die vergleichbar gebogene Schale 9a an dem Formstück 9 abstützt, und sie ferner an ihren Enden deutlich kürzere Stützbereiche 15 aufweist, die sich gegen die Anlagebereiche 9b an dem Formstück 9 anliegen.

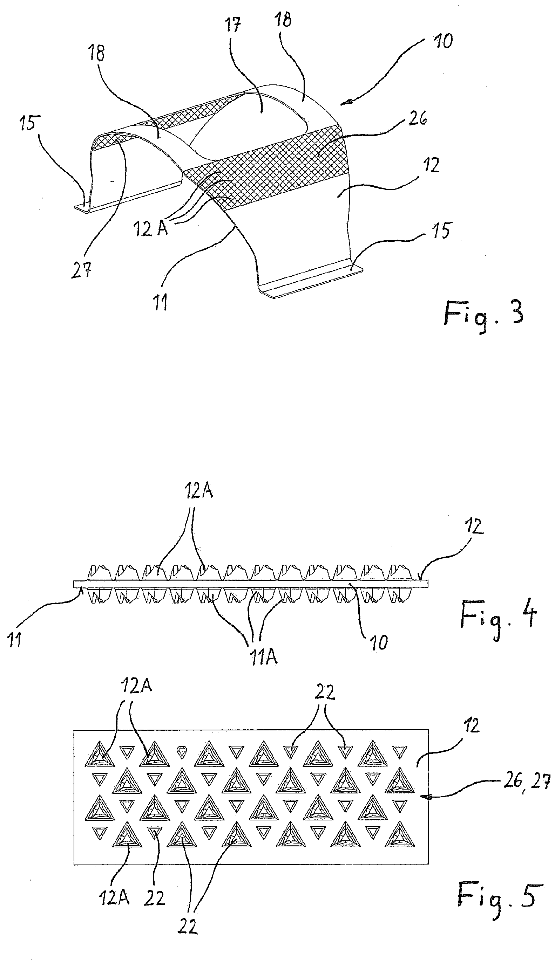

Gemäß Fig. 3 kann der Teilbereich von gebogenem Querschnitt einen kreisförmig gebogenen Querschnitt aufweisen, welcher in diesem Fall die Außenkontur des Achskörpers 1 übernimmt, der hier als ein Rundachskörper ausgebildet ist.

Jedoch muss der Achskörper 1 kein Rundachskörper sein. Ebenso möglich sind unrunde Achskörperquerschnitte. Ist der Achskörper 1 zum Beispiel von elliptischem Querschnitt, wird auch die Schale 10 in ihrem mittleren Teilbereich den entsprechenden elliptischen Biegeverlauf aufweisen.

Die an den gebogenen Teilbereich jeweils über Knicke anschließenden Stützbereiche 15 dienen während der Montage des Fahrwerks als Positionierhilfen. Denn indem sie an den Anlagebereichen 9b des Formstück 9 anliegen, tragen sie während der Fahrwerksmontage zur eindeutigen Lagepositionierung der Achsschale 10 relativ zu dem Formstück 9 und damit relativ zu dem Achslenker 5 bei.

Die Achsschale 10 einschließlich ihrer Stützbereiche 15 ist ein einstückiges, Metallblech, welches durch Umformprozesse hergestellt ist. Auf dem gebogenen Teilbereich ist die Schale 10 breiter als im Bereich ihrer Stützbereiche 15.

Die Achsschale 10 ist im Zentrum ihres gebogenen Teilbereichs mit einer Öffnung 17 versehen, wodurch nur zwei Stege 18 Verbindungen zwischen dem einen und dem anderen Teil des Metallblechkörpers, aus dem die Achsschale 10 besteht, bilden. Die Öffnung 17 erhöht die Biegsamkeit der Achsschale 10 auf jener Teillänge, auf der sich die Öffnung 17 befindet. Die Schale 10 vermag sich daher besonders gut an die Außenseite 20 des Achskörpers anzuschmiegen.

Die Breite der Öffnung 17 zwischen den Stegen 18 ist größer als die Breite, die der Achslenker 5 im Achseinbindungsbereich aufweist. Ist der Achslenker 5 gemäß Fig. 1 zusätzlich mit einem Fangblech 19 versehen, so ist die Breite der Öffnung 17 außerdem größer als die Breite des Fangblechs 19.

Auf einem Teil ihrer Gesamtfläche ist die Achsschale 10 mit scharfkantigen Vorsprüngen 11A auf ihrer Innenseite 11 und weiteren scharfkantigen Vorsprüngen 12A auf ihre Außenseite 12 versehen. Die als Spitzen gestalteten Vorsprünge 11A, 12A sind in der Lage, bei entsprechend hohen Druckkräften, wie sie mittels der Gewindebügel 7 und der darauf fest angezogenen Muttern 7a erzeugt werden, in die gegenüberliegende Fläche unter Materialverdrängung einzudringen. Die Spitzen auf der Innenseite 11 graben sich in das im Vergleich weniger harte Material des Achskörpers 1 ein. Die Spitzen auf der Außenseite 12 graben sich in das im Vergleich weniger harte Material der Schale 9a an dem Formstück 9 ein. In beiden Fällen kommt es zu einem ausgeprägten Formschluss.

Die Spitzen bzw. Vorsprünge 11A, 12A sind Stanzungen in dem Metallblech, aus dem die Achsschale 10 geformt ist. Die Stanzungen umfassen zwischen der Innenseite 11 und der Außenseite 12 sich erstreckende Öffnungen 22, sowie am Rand jeder Öffnung 22 nach außen vorstehende Grate, wobei diese Grate die Vorsprünge bilden. Herstellungstechnisch handelt es sich bei den Graten daher um die nach außen verformten Ränder der beim Stanzen entstandenen Öffnungen 22.

Eine erste Teilmenge der Öffnungen 22 hat ihre zu Graten verformten Ränder auf der Innenseite 11, und bildet so die Vorsprünge 11A. Die übrige, zweite Teilmenge der Öffnungen 22 hat ihre zu Graten verformten Ränder auf der Außenseite 12, und bildet so die weiteren Vorsprünge 12A.

Bei dem Ausführungsbeispiel gemäß Fig. 4 und Fig. 5 sind alle Öffnungen 22 von der Form gleichseitiger Dreiecke, wobei sich vorzugsweise entlang aller drei Ränder dieser Dreiecke nach außen vorstehende Grate und damit scharfkantige Vorsprünge entweder auf der Innenseite 11 oder auf der Außenseite 12 befinden.

Die Öffnungen 22 müssen jedoch nicht wie abgebildet dreieckig sein, sondern können auch z.B. rund oder viereckig sein, oder die Form von Polygonen haben.

Sofern bei dem Formen der Schale 10 Stanzwerkzeuge sowohl von der Innenseite 11 als auch von der Außenseite 12 her in das Blechmaterial eindringen, entstehen Grate und damit Spitzen sowohl auf der einen, wie auch auf der anderen Seite.

Bei dem Ausführungsbeispiel nach den Figuren 4 und 5 sind gleich viele Öffnungen 22 von der einen wie von der anderen Seite des Metallblechs her gestanzt, d. h. die Anzahl der Öffnungen 22 und der um diese Öffnungen herum auf der Innenseite 11 angeordneten Grate und Spitzen 11A ist gleich groß, wie die Anzahl der Öffnungen 22 und der um diese Öffnungen herum auf der Außenseite 12 angeordneten Grate und Spitzen 12A.

Jedoch kann die Anzahl und/oder die Form der Öffnungen und Grate auf den beiden Seiten der Schale auch unterschiedlich sein. Zum Beispiel kann die Anzahl der Öffnungen 22 und der um diese Öffnungen herum auf der Innenseite 11 angeordneten Grate und Spitzen größer ist, als die Anzahl der Öffnungen 22 und der um diese Öffnungen herum auf der Außenseite 12 angeordneten Grate und Spitzen.

In jedem Fall sollten die Vorsprünge 11A auf der konkaven Innenseite und die Vorsprünge 12A auf der konvexen Außenseite jeweils gleichmäßig über die Bereiche verteilt sein, auf denen sie vorhanden sind. Auch sollten, wie dies Fig. 4 zeigt, die Vorsprünge 11A und 12A einander abwechseln, hier durch ihre Anordnung in einem Schachbrettmuster.

Allerdings ist es von Vorteil, wenn die Vorsprünge 11A, 12A nicht auf der gesamten Fläche, sondern nur in bestimmten Bereichen 26, 27 der Achsschale 10 vorhanden sind. Diese Bereiche 26, 27 befinden sich ausschließlich auf dem gebogenen Teilbereich der Achsschale 10. Außerdem befinden sich die Bereiche 26, 27, in Richtung des Biegeverlaufs der Achsschale 10 betrachtet, nur entweder vor oder hinter der Öffnung 17. Dabei reichen, wie die Fig. 3 zeigt, diese Bereiche 26, 27 jeweils bis an den Rand der Öffnung 17 heran. Die zwei Bereiche 26, 27 weisen, wie die Fig. 3 ebenfalls zeigt, eine größere Länge in Längsrichtung des Achskörpers 1 auf, als ihre in Umfangsrichtung der Schale 10 betrachtete Breite beträgt.

Das für die Herstellung der Schale 10 verwendete Metallblech weist eine Materialdicke auf, die, gemessen ohne die Vorsprünge 11A, 12A, zwischen 0,5 mm und 1 mm beträgt und vorzugsweise zwischen 0,7 mm und 0,9 mm.

Für das Metallblech wird ein Federstahl oder ein Edelstahl bevorzugt. Ist das Metallblech kein Edelstahlblech, kann zwecks Korrosionsschutz ein Verzinken des Blechs nach dem Stanzprozess sinnvoll sein.

Der Stanzprozess kann entweder aufeinanderfolgend erfolgen, indem ein Stanzwerkzeug zuerst von der einen, und dann von der anderen Seite her in das Blech gefahren wird. Oder aber der Stanzprozess erfolgt simultan, indem ein erstes Stanzwerkzeuge von der einen, und zugleich ein zweites Stanzwerkzeug von der anderen Seite her in das Blech gefahren wird, und daher sämtliche Öffnungen 22 und Vorsprünge 11A, 12A zugleich geformt werden.

Das Biegen der Schale 10 mit ihrem gebogenen Mittelbereich und den davon rechtwinklig abstehenden Stützbereichen 15 kann im Rahmen des Stanzprozesses erfolgen, oder aber in separaten Biegeprozessen vorher oder nachher.

Die Festigkeit des für die Schale 10 verwendeten Metallblechs ist höher als die Festigkeit jener Materialien, in die die Spitzen 11A, 12A eindringen, also des Materials des Achskörpers 1 und des Materials des Formstücks 9. Die Festigkeit Rm des verwendeten Metallblechs beträgt zwischen 1200 und 1600 N/mm². Hingegen beträgt die Festigkeit Rm des Materials des Achskörpers 1 nur z. B. 460 N/mm², und die Festigkeit des Materials des Formstücks 9 nur z. B. 520 N/mm². Insgesamt beträgt daher die Festigkeit des für die Schale 10 verwendeten Metallblechs mindestens das Zweifache der Festigkeit des Achskörpers 1 und der Festigkeit des Formstücks 9.

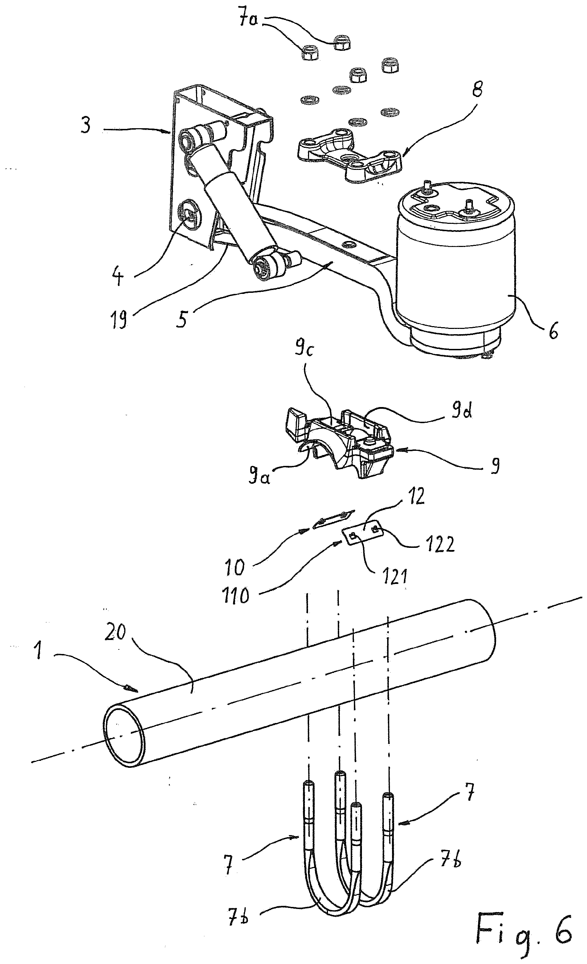

In den Figuren 6 - 10 ist eine zweite Ausführungsform der Achseinbindung in einem Nutzfahrzeug-Fahrwerk wiedergegeben. Bei dieser Ausführungsform kommt nicht nur eine einzelne Schale bzw. Achsschale zur Anwendung, sondern eine Anordnung zweier getrennter, ein Schalenpaar bildender Schalen, bestehend aus einer ersten Schale 10 und einer getrennten zweiten bzw. weiteren Schale 110. Sind die beiden Schalen 10, 110 als Bestandteile des Fahrwerks abschließend montiert, so sind sie auf unterschiedlichen Umfangsabschnitten des Achskörpers getrennt voneinander und im Abstand zueinander angeordnet. Zumindest in dieser montierten Anordnung weisen beide Schalen 10, 110 ihre typische, gebogene Schalenform auf. Vorzugsweise sind die Schalen 10, 110 identisch gestaltet.

Hinsichtlich des für die Schalen 10, 110 verwendeten Materials sowie hinsichtlich der Ausbildung der Vorsprünge 11A, 12A an der Innenseite und der Außenseite gelten die Angaben zu der ersten Ausführungsform gleichermaßen.

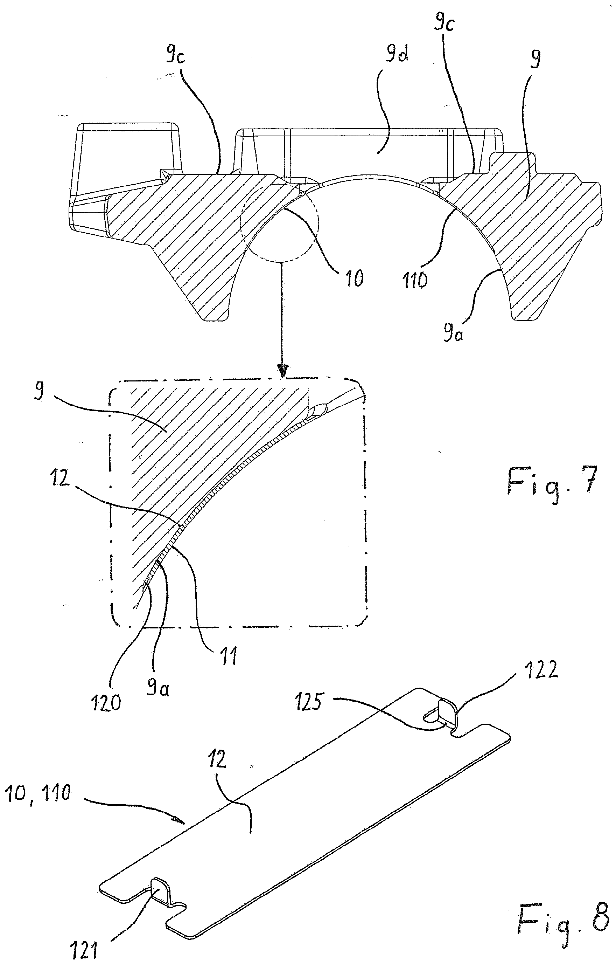

Herstellungstechnisch kann es von Vorteil sein, wenn die produzierten aber noch nicht montierten Schalen, wie dies anschaulich die Fig. 8 wiedergibt, von flacher Gestalt sind. Die Schalen 10, 110 sind jedoch biegsam, wodurch sich ihre zunächst flache Gestalt spätestens mit der abschließenden Montage der Schalen im Fahrwerk zu der charakteristischen, gebogenen Schalenform verändert.

Spätestens nach Abschluss der Montage und damit im tatsächlichen Betriebszustand des Nutzfahrzeug-Fahrwerks ist daher jede Schale 10, 110 der Schalenanordnung gebogen gestaltet, mit einer dem Achslenker 5 zugewandten, konvexen Außenseite 12 und einer konkaven Innenseite 11 zur unmittelbaren Abstützung gegen den Achskörper 1.

Wiederum sind, wie bei der ersten Ausführungsform, an jeder Schale 10, 110 an deren Innenseite 11 die Vorsprünge 11A für einen materialverdrängenden Eingriff in die Außenseite des Achskörpers 1 ausgebildet, und an der Außenseite 12 die weiteren Vorsprünge 12A für einen materialverdrängenden Eingriff gegenüber dem Achslenker 5. Dieser letztere, materialverdrängende Eingriff kann entweder unmittelbar an dem Achslenker 5 erfolgen, oder wie beim Ausführungsbeispiel an den konkav gebogenen Schalen 9a, welche an dem zusätzlichen, gegen den Achslenker 5 abgestützten Bauteil 9 ausgebildet sind. Zu diesem Zweck sind die Schalen 9a, dem Achskörper 1 zugewandt, jeweils mit einer Vertiefung 120 versehen, wobei die erste Schale 10 in der Vertiefung der ersten Schale 9a, und die zweite Schale 110 in der Vertiefung der zweiten Schale 9a angeordnet ist. Die Anordnung in den Vertiefungen 120 ist vorzugsweise ohne größeres seitliches Spiel.

Wichtig ist, dass die Gesamtdicke jeder Schale 10, 110, also einschließlich ihrer vorstehenden Spitzen, größer ist als die Tiefe der Vertiefung 120, in die die jeweilige Schale 10, 110 eingesetzt ist.

Um die Schalen 10, 110 zunächst in einer richtigen Position vormontieren zu können, ist jede Schale 10, 110 an ihrer Außenseite 12 mit Laschen 121, 122 versehen, wobei sich die Laschen 121, 122 weiter nach außen erstrecken als die ebenfalls auf der Außenseite 12 angeordneten Vorsprünge 12A. Bei jeder Lasche 121, 122 handelt es sich um eine entlang einer Knicklinie 125 rechtwinklig abgeknickte Stanzung des Metallblechs, aus dem die jeweilige Schale 10, 110 besteht. Die Knicklinie 125 erstreckt sich in Richtung des Biegeverlaufs, den die Schale 10, 110 im Betriebszustand einnimmt.

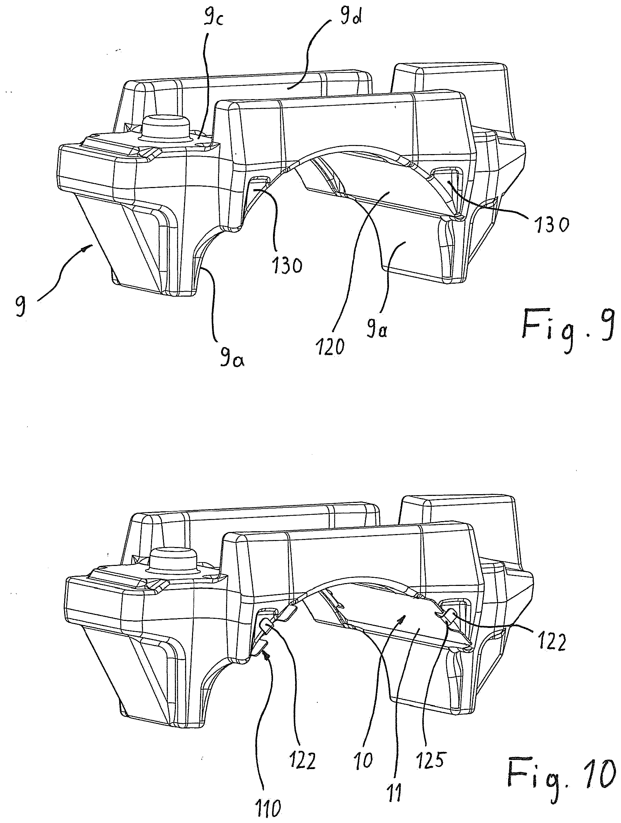

Gemäß Fig. 10 stützen sich die beiden Laschen 121, 122 der Schalen 10, 110 gegen positionierende Anschläge 130 an beiden Seiten des Bauteils 9 ab. Dies führt zu einem vorläufigen Klemmen der Schalen 10, 110 an dem Bauteil 9, und damit zu einer Vormontage der Schalen 10, 110, insbesondere auch in Längsrichtung des Achskörpers 1.

Nach dem daran anschließenden Ansetzen des Achskörpers 1, verbunden mit dem Verbiegen der Schalen 10, 110 zu ihrer Schalenform, bedarf es keiner weiteren Fixierung über die Laschen 121, 122 mehr. Denn in diesem Betriebszustand der Schalen 10, 110 und des Fahrwerks sorgen die Spitzen bzw. Vorsprünge 11A, 12A für eine ausreichende gegenseitige Lagefixierung des Systems aus Achslenker 5, Bauteil 9, Achskörper 1 und den beiden Schalen 10, 110.

### Bezugszeichenliste

- 1: Achskörper
- 2: Chassis
- 3: Stütze
- 4: Bolzen
- 5: Achslenker
- 6: Luftfeder
- 7: Gewindebügel
- 7a: Mutter
- 7b: Bügelabschnitt
- 8: Federplatte
- 9: Bauteil, Formstück
- 9a: Schale
- 9b: Anlagebereich
- 9c: Auflage
- 9d: Seitenwand
- 9e: Element

- 10: Schale, Achsschale
- 11: Innenseite
- 11A: Vorsprung, Spitze
- 12: Außenseite
- 12A: Vorsprung, Spitze
- 15: Stützbereich
- 17: Öffnung
- 18: Steg
- 19: Fangblech

- 20: Außenseite des Achskörpers
- 22: Öffnung
- 26: Bereich mit Vorsprüngen
- 27: Bereich mit Vorsprüngen
- 110: Schale
- 120: Vertiefung
- 121: Lasche
- 122: Lasche
- 125: Knicklinie
- 130: Anschlag

## Patentansprüche

1. Fahrwerk für ein Nutzfahrzeug mit einem sich quer zur Fahrzeuglängsrichtung erstreckenden Achskörper (1), einem sich im Wesentlichen in Fahrzeuglängsrichtung erstreckenden Achslenker (5) und einer Schale (10) zwischen dem Achskörper (1) und dem Achslenker (5), welche eine dem Achslenker (5) zugewandte Außenseite (12) und eine dem Achskörper (1) zugewandte Innenseite (11) aufweist, wobei die Innenseite (11) unter Druckbelastung unmittelbar gegen die Außenseite (20) des Achskörpers (1) abgestützt ist und an der Innenseite (11) ausgebildete Vorsprünge (11A) materialverdrängend in die Außenseite (20) des Achskörpers (1) eingreifen, **dadurch gekennzeichnet, dass** weitere Vorsprünge (12A) an der Außenseite (12) der Schale (10) ausgebildet sind, und dass die weiteren Vorsprünge (12A) materialverdrängend in eine Fläche an dem Achslenker (5) oder an einem gegen den Achslenker (5) abgestützten Bauteil (9) eingreifen.

2. Fahrwerk nach Anspruch 1, **dadurch gekennzeichnet, dass** die Schale (10) ein verformtes Metallblech ist.

3. Fahrwerk nach Anspruch 2, **dadurch gekennzeichnet, dass** das Metallblech aus Edelstahl oder Federstahl besteht.

4. Fahrwerk nach Anspruch 2 oder 3, **dadurch gekennzeichnet, dass** die Vorsprünge (11A) und die weiteren Vorsprünge (12A) aus Stanzungen des Metallblechs gebildet sind.

5. Fahrwerk nach Anspruch 4, **dadurch gekennzeichnet, dass** die Stanzungen zwischen der Außenseite (12) und der Innenseite (11) sich erstreckende Öffnungen (22) umfassen sowie am Rand jeder Öffnung (22) entweder nur auf der Innenseite (11) oder nur auf der Außenseite (12) hervorstehende Grate, wobei die Grate die Vorsprünge (11A bzw. 12A) bilden.

6. Fahrwerk nach Anspruch 5, **dadurch gekennzeichnet, dass** die Grate nach außen verformte Ränder der jeweiligen Öffnungen (22) sind.

7. Fahrwerk nach einem der vorangehenden Ansprüche, **dadurch gekennzeichnet, dass** die Schale (10) auf zumindest einem Teilbereich einen gebogenen Querschnitt aufweist, vorzugsweise einen teilkreisförmig gebogenen Querschnitt.

8. Fahrwerk nach Anspruch 7, **dadurch gekennzeichnet, dass** die Schale (10) in Verlängerung des gebogenen Querschnitts jeweils einen Stützbereich (15) aufweist, wobei die Übergänge zu den Stützbereichen (15) als Knicke mit Knickrichtung entgegengesetzt zur Biegerichtung auf dem gebogenen Querschnitt gestaltet sind.

9. Fahrwerk nach Anspruch 8, **dadurch gekennzeichnet, dass** sich die Vorsprünge (11A, 12A) nur auf dem gebogenen Querschnitt befinden.

10. Fahrwerk nach einem der Ansprüche 7 - 9, **dadurch gekennzeichnet, dass** die Schale (10) mit einer zentral angeordneten Öffnung (17) versehen ist, und dass sich alle Vorsprünge (11A, 12A) in Richtung des Biegeverlaufs der Schale (10) entweder vor oder hinter der Öffnung (17) befinden.

11. Fahrwerk nach Anspruch 10, **dadurch gekennzeichnet, dass** sich die Vorsprünge (11A, 12A) in Bereichen des gebogenen Querschnitts befinden, die bis an den Rand der Öffnung (17) heranreichen.

12. Fahrwerk nach Anspruch 7, **gekennzeichnet durch** eine gemeinsam mit der Schale (10) ein Schalenpaar bildende, weitere Schale (110), wobei die zwei Schalen (10, 110) auf unterschiedlichen Umfangsabschnitten des Achskörpers (1) angeordnet sind.

13. Fahrwerk nach Anspruch 12, **dadurch gekennzeichnet, dass** die Erstreckung jeder Schale (10, 110) in Richtung ihres Biegeverlaufs kürzer ist, als der kürzeste Abstand zwischen den Schalen (10, 110).

14. Fahrwerk nach Anspruch 12 oder 13, **dadurch gekennzeichnet, dass** jede Schale (10, 110) an ihrer Außenseite (12) mit mindestens einer Lasche (121, 122) versehen ist, welche sich weiter nach außen erstreckt als die weiteren Vorsprünge (12A) und welche sich quer zur Fahrzeuglängsrichtung gegen einen positionierenden Anschlag (130) an dem Achslenker (5) bzw. an dem gegen den Achslenker (5) abgestützten Bauteil (9) abstützt.

15. Fahrwerk nach einem der Ansprüche 12 - 14, **dadurch gekennzeichnet, dass** an dem gegen den Achslenker (5) abgestützten Bauteil (9) dem Achskörper (1) zugewandt zwei Vertiefungen (120) ausgebildet sind, wobei die erste Schale (10) in der ersten Vertiefung, und die zweite Schale (110) in der zweiten Vertiefung angeordnet ist und die Gesamtdicke jeder Schale (10, 110) größer ist als die Tiefe der jeweiligen Vertiefung (120).

16. Schale zur Anordnung zwischen einem Achskörper und einem Achslenker einer Nutzfahrzeugachse, mit einer dem Achslenker zugewandten Außenseite (12), mit einer Innenseite (11) zur unmittelbaren Abstützung gegen den Achskörper, und mit an der Innenseite (11) ausgebildeten Vorsprüngen (11A) für einen materialverdrängenden Eingriff in die Außenseite des Achskörpers, **dadurch gekennzeichnet, dass** an der Außenseite (12) der Schale (10) weitere Vorsprünge (12A) für einen materialverdrängenden Eingriff in eine Fläche an dem Achslenker oder an einem gegen den Achslenker abgestützten Bauteil ausgebildet sind.

17. Schale nach Anspruch 16, **dadurch gekennzeichnet, dass** diese ein verformtes Metallblech ist.

18. Schale nach Anspruch 17, **dadurch gekennzeichnet, dass** das Metallblech aus Edelstahl oder Federstahl besteht.

19. Schale nach Anspruch 17 oder 18, **dadurch gekennzeichnet, dass** die Vorsprünge (11A) und die weiteren Vorsprünge (12A) aus Stanzungen des Metallblechs gebildet sind.

20. Schale nach Anspruch 19, **dadurch gekennzeichnet, dass** die Stanzungen zwischen der Außenseite (12) und der Innenseite (11) sich erstreckende Öffnungen (22) umfassen sowie am Rand jeder Öffnung (22) entweder nur auf der Innenseite (11) oder nur auf der Außenseite (12) hervorstehende Grate, wobei die Grate die Vorsprünge (11A bzw. 12A) bilden.

21. Schale nach Anspruch 20, **dadurch gekennzeichnet, dass** die Grate nach außen verformte Ränder der jeweiligen Öffnungen (22) sind.

22. Schale nach einem der Ansprüche 16 - 21, **dadurch gekennzeichnet, dass** diese auf zumindest einem Teilbereich einen gebogenen Querschnitt aufweist, vorzugsweise einen teilkreisförmig gebogenen Querschnitt.

23. Schale nach Anspruch 22, **dadurch gekennzeichnet, dass** diese in Verlängerung des gebogenen Querschnitts jeweils einen Stützbereich (15) aufweist, wobei die Übergänge zu den Stützbereichen (15) als Knicke mit Knickrichtung entgegengesetzt zur Biegerichtung auf dem gebogenen Querschnitt gestaltet sind.

24. Schale nach Anspruch 23, **dadurch gekennzeichnet, dass** sich die Vorsprünge (11A, 12A) nur auf dem gebogenen Querschnitt befinden.

25. Schale nach einem der Ansprüche 22 - 24, **dadurch gekennzeichnet, dass** diese mit einer zentral angeordneten Öffnung (17) versehen ist, und dass sich alle Vorsprünge (11A, 12A) in Richtung des Biegeverlaufs der Schale (10) entweder vor oder hinter der Öffnung (17) befinden.

26. Schale nach Anspruch 25, **dadurch gekennzeichnet, dass** sich die Vorsprünge (11A, 12A) in Bereichen des gebogenen Querschnitts befinden, die bis an den Rand der Öffnung (17) heranreichen.

27. Schale nach einem der Ansprüche 16 - 26, **dadurch gekennzeichnet, dass** die Materialdicke der Schale (10) ohne die Vorsprünge (11A, 12A) zwischen 0,5 mm und 1 mm beträgt, vorzugsweise zwischen 0,7 mm und 0,9 mm.

28. Schale nach einem der Ansprüche 16 - 27, **dadurch gekennzeichnet, dass** die Festigkeit des Materials der Schale (10) mindestens das Zweifache der Festigkeit des Materials des Achskörpers und des gegen den Achslenker abgestützten Bauteils beträgt.

29. Anordnung zweier ein Schalenpaar bildender Schalen (10 ,11A) zwischen einem Achskörper und einem Achslenker einer Nutzfahrzeugachse, umfassend eine erste Schale (10) und eine zu dieser im Abstand angeordnete zweite Schale (110), wobei jede der Schalen (10, 110) eine dem Achslenker zugewandte Außenseite (12) und eine Innenseite (11) zur unmittelbaren Abstützung gegen den Achskörper aufweist, und wobei jeweils an der Innenseite (11) Vorsprünge (11A) für einen materialverdrängenden Eingriff in die Außenseite des Achskörpers ausgebildet sind, **dadurch gekennzeichnet, dass** jeweils an der Außenseite (12) weitere Vorsprünge (12A) für einen materialverdrängenden Eingriff in eine Fläche an dem Achslenker oder an einem gegen den Achslenker abgestützten Bauteil ausgebildet sind.

30. Anordnung nach Anspruch 29, **dadurch gekennzeichnet, dass** die Schalen (10, 110) jeweils einen gebogenen Querschnitt aufweisen, vorzugsweise einen teilkreisförmig gebogenen Querschnitt.

31. Anordnung nach Anspruch 29 oder 30, **dadurch gekennzeichnet, dass** jede Schale (10, 110) an ihrer Außenseite (12) mit mindestens einer Lasche (121, 122) versehen ist, welche sich weiter nach außen erstreckt als die weiteren Vorsprünge (12A).

32. Anordnung nach Anspruch 31, **dadurch gekennzeichnet, dass** die Lasche (121, 122) eine entlang einer Knicklinie (125) rechtwinklig abgeknickte Stanzung eines Metallblechs ist, aus dem die jeweilige Schale (10, 110) besteht.

33. Anordnung nach Anspruch 32, **dadurch gekennzeichnet, dass** sich die Knicklinie (125) in Richtung des Biegeverlaufs der Schale (10, 110) erstreckt.

## Claims

1. Chassis for a commercial vehicle, with an axle body (1) extending transversely with respect to the longitudinal direction of the vehicle, an axle link (5) extending substantially in the longitudinal direction of the vehicle, and a shell (10) between the axle body (1) and the axle link (5), which shell has an outer side (12) facing the axle link (5) and an inner side (11) facing the axle body (1), wherein the inner side (11) is supported directly against the outer side (20) of the axle body (1) under pressure loading and protrusions (11A) formed on the inner side (11) engage in a material-displacing manner in the outer side (20) of the axle body (1), **characterized in that** further protrusions (12A) are formed on the outer side (12) of the shell (10), and **in that** the further protrusions (12A) engage in a material-displacing manner in a surface on the axle link (5) or on a component (9) supported against the axle link (5).

2. Chassis according to Claim 1, **characterized in that** the shell (10) is a deformed metal sheet.

3. Chassis according to Claim 2, **characterized in that** the metal sheet is composed of stainless steel or spring steel.

4. Chassis according to Claim 2 or 3, **characterized in that** the protrusions (11A) and the further protrusions (12A) are formed from punched portions of the metal sheet.

5. Chassis according to Claim 4, **characterized in that** the punched portions comprise openings (22) extending between the outer side (12) and the inner side (11) and burrs protruding at the edge of each opening (22) either only on the inner side (11) or only on the outer side (12), the burrs forming the protrusions (11A or 12A).

6. Chassis according to Claim 5, **characterized in that** the burrs are outwardly deformed edges of the respective openings (22).

7. Chassis according to one of the preceding claims, **characterized in that** the shell (10) has, on at least a partial region, a bent cross section, preferably a cross section bent in a partially circular manner.

8. Chassis according to Claim 7, **characterized in that** the shell (10) in each case has a supporting region (15) as an extension of the bent cross section, wherein the transitions to the supporting regions (15) are configured as kinks with a buckling direction opposed to the bending direction on the bent cross section.

9. Chassis according to Claim 8, **characterized in that** the protrusions (11A, 12A) are located only on the bent cross section.

10. Chassis according to one of Claims 7-9, **characterized in that** the shell (10) is provided with a centrally arranged opening (17), and **in that** all of the protrusions (11A, 12A) in the direction of the bending profile of the shell (10) are located either in front of or behind the opening (17).

11. Chassis according to Claim 10, **characterized in that** the protrusions (11A, 12A) are located in regions of the bent cross section that reach as far as the edge of the opening (17).

12. Chassis according to Claim 7, **characterized by** a further shell (110) forming a pair of shells together with the shell (10), wherein the two shells (10, 110) are arranged on different circumferential portions of the axle body (1).

13. Chassis according to Claim 12, **characterized in that** the extent of each shell (10, 110) in the direction of its bending profile is shorter than the shortest distance between the shells (10, 110).

14. Chassis according to Claim 12 or 13, **characterized in that** each shell (10, 110) is provided on its outer side (12) with at least one tab (121, 122) which extends further outwards than the further protrusions (12A) and which is supported transversely with respect to the vehicle longitudinal direction against a positioning stop (130) on the axle link (5) or on the component (9) supported against the axle link (5).

15. Chassis according to one of Claims 12-14, **characterized in that** two depressions (120) are formed, facing the axle body (1), on the component (9) supported against the axle link (5), wherein the first shell (10) is arranged in the first depression, and the second shell (110) is arranged in the second depression, and the overall thickness of each shell (10, 110) is greater than the depth of the respective depression (120).

16. Shell for arranging between an axle body and an axle link of a commercial vehicle axle, with an outer side (12) facing the axle link, with an inner side (11) for directly supporting against the axle body, and with protrusions (11A) formed on the inner side (11) for material-displacing engagement in the outer side of the axle body, **characterized in that** further protrusions (12A) are formed on the outer side (12) of the shell (10) for material-displacing engagement in a surface on the axle link or on a component supported against the axle link.

17. Shell according to Claim 16, **characterized in that** the latter is a deformed metal sheet.

18. Shell according to Claim 17, **characterized in that** the metal sheet is composed of stainless steel or spring steel.

19. Shell according to Claim 17 or 18, **characterized in that** the protrusions (11A) and the further protrusions (12A) are formed from punched portions of the metal sheet.

20. Shell according to Claim 19, **characterized in that** the punched portions comprise openings (22) extending between the outer side (12) and the inner side (11) and burrs protruding at the edge of each opening (22) either only on the inner side (11) or only on the outer side (12), the burrs forming the protrusions (11A or 12A).

21. Shell according to Claim 20, **characterized in that** the burrs are outwardly deformed edges of the respective openings (22).

22. Shell according to one of Claims 16-21, **characterized in that** the latter has, on at least a partial region, a bent cross section, preferably a cross section bent in a partially circular manner.

23. Shell according to Claim 22, **characterized in that** the latter in each case has a supporting region (15) as an extension of the bent cross section, wherein the transitions to the supporting regions (15) are configured as kinks with a buckling direction opposed to the bending direction on the bent cross section.

24. Shell according to Claim 23, **characterized in that** the protrusions (11A, 12A) are located only on the curved cross section.

25. Shell according to one of Claims 22-24, **characterized in that** the latter is provided with a centrally arranged opening (17), and **in that** all of the protrusions (11A, 12A) in the direction of the bending profile of the shell (10) are located either in front of or behind the opening (17).

26. Shell according to Claim 25, **characterized in that** the protrusions (11A, 12A) are located in regions of the bent cross section that reach as far as the edge of the opening (17).

27. Shell according to one of Claims 16-26, **characterized in that** the material thickness of the shell (10) without the protrusions (11A, 12A) is between 0.5 mm and 1 mm, preferably between 0.7 mm and 0.9 mm.

28. Shell according to one of Claims 16-27, **characterized in that** the strength of the material of the shell (10) is at least double the strength of the material of the axle body and of the component supported against the axle link.

29. Arrangement of two shells (10, 11A) forming a pair of shells between an axle body and an axle link of a commercial vehicle axle, comprising a first shell (10) and a second shell (110) arranged at a distance therefrom, wherein each of the shells (10, 110) has an outer side (12) facing the axle link and an inner side (11) for directly supporting against the axle body, and wherein protrusions (11A) for material-displacing engagement in the outer side of the axle body are in each case formed on the inner side (11), **characterized in that** further protrusions (12A) for material-displacing engagement in a surface on the axle link or on a component supported against the axle link are in each case formed on the outer side (12).

30. Arrangement according to Claim 29, **characterized in that** the shells (10, 110) each have a bent cross section, preferably a cross section bent in a partially circular manner.

31. Arrangement according to Claim 29 or 30, **characterized in that** each shell (10, 110) is provided on its outer side (12) with at least one tab (121, 122) which extends further outwards than the further protrusions (12A).

32. Arrangement according to Claim 31, **characterized in that** the tab (121, 122) is a punched portion of a metal sheet, of which the respective shell (10, 110) consists, the punched portion being bent at a right angle along a buckling line (125).

33. Arrangement according to Claim 32, **characterized in that** the buckling line (125) extends in the direction of the bending profile of the shell (10, 110).

## Revendications

1. Châssis pour un véhicule utilitaire comportant un corps d'essieu (1) s'étendant transversalement à la direction longitudinale du véhicule, un bras oscillant d'essieu (5) s'étendant sensiblement dans la direction longitudinale du véhicule et une coque (10) entre le corps d'essieu (1) et le bras oscillant d'essieu (5), laquelle coque comprend un côté extérieur (12) tourné vers le bras oscillant d'essieu (5) et un côté intérieur (11) tourné vers le corps d'essieu (1), le côté intérieur (11) s'appuyant directement contre le côté extérieur (20) du corps d'essieu (1) sous une sollicitation de compression et des saillies (11A) formées sur le côté intérieur (11) venant en prise dans le côté extérieur (20) du corps d'essieu (1) avec refoulement de matériau, **caractérisé en ce que** d'autres saillies (12A) sont formées sur le côté extérieur (12) de la coque (10), et **en ce que** les autres saillies (12A) viennent en prise avec refoulement de matériau dans une surface sur le bras oscillant d'essieu (5) ou sur un composant (9) s'appuyant contre le bras oscillant d'essieu (5).

2. Châssis selon la revendication 1, **caractérisé en ce que** la coque (10) est une tôle métallique déformée.

3. Châssis selon la revendication 2, **caractérisé en ce que** la tôle métallique est constituée d'acier fin ou d'acier à ressorts.

4. Châssis selon la revendication 2 ou 3, **caractérisé en ce que** les saillies (11A) et les autres saillies (12A) sont formées à partir de découpes de la tôle métallique.

5. Châssis selon la revendication 4, **caractérisé en ce que** les découpes comportent des ouvertures (22) s'étendant entre le côté extérieur (12) et le côté intérieur (11) ainsi que des arêtes faisant saillie au niveau du bord de chaque ouverture (22) soit seulement sur le côté intérieur (11) soit seulement sur le côté extérieur (12), les arêtes formant les saillies (11A ou 12A) .

6. Châssis selon la revendication 5, **caractérisé en ce que** les arêtes sont des bords, formés vers l'extérieur, des ouvertures (22) respectives.

7. Châssis selon l'une des revendications précédentes, **caractérisé en ce que** la coque (10) présente, sur au moins une région partielle, une section transversale incurvée, de préférence une section transversale incurvée en forme d'arc de cercle.

8. Châssis selon la revendication 7, **caractérisé en ce que** la coque (10) comprend respectivement une région d'appui (15) dans le prolongement de la section transversale incurvée, les transitions vers les régions d'appui (15) étant configurées sous forme de plis dont la direction de pli est opposée à la direction de courbure sur la section transversale incurvée.

9. Châssis selon la revendication 8, **caractérisé en ce que** les saillies (11A, 12A) ne se trouvent que sur la section transversale incurvée.

10. Châssis selon l'une des revendications 7 à 9, **caractérisé en ce que** la coque (10) est dotée d'une ouverture (17) disposée centralement, et **en ce que** toutes les saillies (11A, 12A) se trouvent soit devant soit derrière l'ouverture (17) dans la direction de l'allure de courbure de la coque (10).

11. Châssis selon la revendication 10, **caractérisé en ce que** les saillies (11A, 12A) se trouvent dans des régions de la section transversale incurvée qui atteignent le bord de l'ouverture (17).

12. Châssis selon la revendication 7, **caractérisé par** une autre coque (110) formant une paire de coques conjointement avec la coque (10), les deux coques (10, 110) étant disposées sur différentes parties périphériques du corps d'essieu (1).

13. Châssis selon la revendication 12, **caractérisé en ce que** l'étendue de chaque coque (10, 110) est plus courte dans la direction de son allure de courbure que la plus courte distance entre les coques (10, 110).

14. Châssis selon la revendication 12 ou 13, **caractérisé en ce que** chaque coque (10, 110) est dotée d'au moins une languette (121, 122) sur son côté extérieur (12), laquelle languette s'étend plus loin vers l'extérieur que les autres saillies (12A) et laquelle s'appuie, transversalement à la direction longitudinale du véhicule, contre une butée (130) de positionnement sur le bras oscillant d'essieu (5) ou sur le composant (9) s'appuyant contre le bras oscillant d'essieu (5).

15. Châssis selon l'une des revendications 12 à 14, **caractérisé en ce que** deux renfoncements (120) sont formés sur le composant (9) s'appuyant contre le bras oscillant d'essieu (5) de manière tournée vers le corps d'essieu (1), la première coque (10) étant disposée dans le premier renfoncement, et la deuxième coque (110) étant disposée dans le deuxième renfoncement et l'épaisseur totale de chaque coque (10, 110) étant supérieure à la profondeur du renfoncement (120) respectif.

16. Coque destinée à être disposée entre un corps d'essieu et un bras oscillant d'un essieu de véhicule utilitaire, comportant un côté extérieur (12) tourné vers le corps d'essieu, comportant un côté intérieur (11) destiné à s'appuyer directement contre le corps d'essieu, et comportant des saillies (11A) formées sur le côté intérieur (11) pour une entrée en prise avec refoulement de matériau dans le côté extérieur du corps d'essieu, **caractérisée en ce que** d'autres saillies (12A) sont formées sur le côté extérieur (12) de la coque (10) pour une entrée en prise avec refoulement de matériau dans une surface sur le bras oscillant d'essieu ou sur un composant s'appuyant contre le bras oscillant d'essieu.

17. Coque selon la revendication 16, **caractérisée en ce qu'**elle est une tôle métallique déformée.

18. Coque selon la revendication 16, **caractérisée en ce que** la tôle métallique est constituée d'acier fin ou d'acier à ressorts.

19. Coque selon la revendication 17 ou 18, **caractérisée en ce que** les saillies (11A) et les autres saillies (12A) sont formées à partir de découpes de la tôle métallique.

20. Coque selon la revendication 19, **caractérisée en ce que** les découpes comportent des ouvertures (22) s'étendant entre le côté extérieur (12) et le côté intérieur (11) ainsi que des arêtes faisant saillie au niveau du bord de chaque ouverture (22) soit seulement sur le côté intérieur (11) soit seulement sur le côté extérieur (12), les arêtes formant les saillies (11A ou 12A) .

21. Coque selon la revendication 20, **caractérisée en ce que** les arêtes sont des bords, déformés vers l'extérieur, des ouvertures (22) respectives.

22. Coque selon l'une des revendications 16 à 21, **caractérisée en ce que** celle-ci présente, sur au moins une région partielle, une section transversale incurvée, de préférence une section transversale incurvée en forme d'arc de cercle.

23. Coque selon la revendication 22, **caractérisée en ce que** celle-ci comprend respectivement une région d'appui (15) dans le prolongement de la section transversale incurvée, les transitions vers les régions d'appui (15) étant configurées sous forme de plis dont la direction de pli est opposée à la direction de courbure sur la section transversale incurvée.

24. Coque selon la revendication 23, **caractérisée en ce que** les saillies (11A, 12A) ne se trouvent que sur la section transversale incurvée.

25. Coque selon l'une des revendications 22 à 24, **caractérisée en ce que** celle-ci est dotée d'une ouverture disposée (17) centralement, et **en ce que** toutes les saillies (11A, 12A) se trouvent soit devant soit derrière l'ouverture (17) dans la direction de l'allure de courbure de la coque (10).

26. Coque selon la revendication 25, **caractérisée en ce que** les saillies (11A, 12A) se trouvent dans des régions de la section transversale incurvée qui atteignent le bord de l'ouverture (17).

27. Coque selon l'une des revendications 16 à 26, **caractérisée en ce que** l'épaisseur de matériau de la coque (10) sans les saillies (11A, 12A) est comprise entre 0,5 mm et 1 mm, de préférence entre 0,7 mm et 0,9 mm.

28. Coque selon l'une des revendications 16 à 27, **caractérisée en ce que** la résistance du matériau de la coque (10) est égale au moins au double de la résistance du matériau du corps d'essieu et du composant s'appuyant contre le bras oscillant d'essieu.

29. Agencement de deux coques (10, 11A) formant une paire entre un corps d'essieu et un bras oscillant d'un essieu de véhicule utilitaire, comportant une première coque (10) et une deuxième coque (110) disposée à distance de celle-ci, chacune des coques (10, 110) comprenant un côté extérieur (12) tourné vers le bras oscillant d'essieu et un côté intérieur (11) destiné à s'appuyer directement contre le corps d'essieu, et des saillies (11A) pour une entrée en prise avec refoulement de matériau dans le côté extérieur du corps d'essieu étant formées respectivement sur le côté intérieur (11), **caractérisé en ce que** d'autres saillies (12A) pour une entrée en prise avec refoulement de matériau dans une surface sur le bras oscillant d'essieu ou sur un composant s'appuyant contre le bras oscillant d'essieu sont formées respectivement sur le côté extérieur (12).

30. Agencement selon la revendication 29, **caractérisé en ce que** les coques (10, 110) présentent respectivement une section transversale incurvée, de préférence une section transversale incurvée en forme d'arc de cercle.

31. Agencement selon la revendication 29 ou 30, **caractérisé en ce que** chaque coque (10, 110) est dotée d'au moins une languette (121, 122) sur son côté extérieur (12), laquelle languette s'étend plus loin vers l'extérieur que les autres saillies (12A).

32. Agencement selon la revendication 31, **caractérisé en ce que** la languette (121, 122) est une découpe, pliée perpendiculairement le long d'une ligne de pliage (125), d'une tôle métallique dont la coque (10, 110) respective est constituée.

33. Agencement selon la revendication 32, **caractérisé en ce que** la ligne de pliage (125) s'étend dans la direction de l'allure de courbure de la coque (10, 110).
